# EUROPÄISCHE PATENTSCHRIFT

(11) **EP 2 137 089 B1**
(45) Veröffentlichungstag und Bekanntmachung des Hinweises auf die Patenterteilung: **16.06.2010**
(21) Anmeldenummer: 08717282.1
(22) Anmeldetag: 29.02.2008
(51) Int. Cl.: B65G 15/44, B65G 17/02, B65G 21/04, B65G 39/20

(54) **FÖRDERBAND FÜR EINE LANGSTRECKENFÖRDERANLAGE**
BELT CONVEYOR FOR A LONG-DISTANCE CONVEYOR
BANDE TRANSPORTEUSE POUR UNE INSTALLATION DE TRANSPORT EN LONGUEUR

(30) Priorität: 12.04.2007 DE 102007017287
(43) Veröffentlichungstag der Anmeldung: 30.12.2009
(73) Patentinhaber: ContiTech Transportbandsysteme GmbH, 30165 Hannover (DE)
(72) Erfinder: DEITERS, Rolf-Hartmut, 37589 Kalefeld (DE)
(74) Vertreter: Finger, Karsten
(86) Internationale Anmeldenummer: PCT/EP2008/052502
(87) Internationale Veröffentlichungsnummer: WO 2008/125385

(56) Entgegenhaltungen:
- DE-A1- 10 348 516
- DE-U1- 20 104 371

## Beschreibung

Die Erfindung betrifft ein Förderband für eine Langstreckenförderanlage gemäß dem Oberbegriff des Patentanspruchs 1.

Ein solches gattungsbildendes Förderband ist aus der EP 0 745 545 A2 bekannt, in der eine Förderanlage zum Transport von Gütern über lange Strecken mittels dieses Förderbandes beschrieben wird. Das in sich geschlossene Förderband weist einen sich in Förderrichtung erstreckenden Fördergurt sowie voneinander beabstandete Balken auf, die quer zur Förderrichtung auf dem Fördergurt befestigt sind. An den beiden freien Enden dieser Querbalken ist jeweils eine Seilrolle drehbar gelagert angeordnet, die auf längs des Förderbandes geführten Tragseilen abrollen. Hierdurch wird die vom Gewicht des Fördermaterials auf das Förderband aufgebrachte Last an die Tragseile weitergeleitet.

Zudem verfügt dieses Förderband über rechts- und linksseitige Seitenwände, die im Wesentlichen senkrecht auf der Tragseite des Fördergurtes befestigt sind. Dadurch sind auf dem Förderband in der Praxis bis zu 6 Meter lange kastenförmige Transportbereiche ausgebildet, in denen das Fördergut aufnehmbar ist.

Die in dieser Druckschrift offenbarten Querbalken beziehungsweise Achsen sind hinsichtlich ihres Aufbaus und der Art ihrer Verbindung mit dem Förderband nur sehr schematisch dargestellt. Dabei stellen gerade diese Aspekte bei der Realisierung eines realen Langstreckenförderbandes technisch schwierig lösbare Teilprobleme dar, weil über die Querbalken die Weiterleitung der Förderbandlasten auf die Seilrollen sicher realisiert werden muss.

Aus der DE 103 48 516 A1 ist ein Förderband für eine Langstreckenförderanlage mit einem langgestreckten Fördergurt bekannt, an dem in Längsrichtung hintereinander angeordnet Querbalken befestigt sind. An den freien Enden dieser Querbalken ist jeweils eine Seilrolle drehbar gelagert, die sich auf zugeordneten Tragseilen abstützen. Um die Weiterleitung der Transportlasten auf die Tragrollen zu gewährleisten, sind die Querbalken im Wesentlichen aus einem Verbindungsrohr und einem Achshalter gebildet, die gemeinsam über Verbindungsmittel an dem Fördergurt befestigt sind.

Diese technische Lösung hat sich im Wesentlichen bewährt. Es wurde aber festgestellt, dass das Förderband aufgrund der notwendigen Drehung am Ende der Förderstrecke in seinen äußeren Bereichen gedehnt und in seinen inneren Bereichen gestaucht wird. Dadurch ist es möglich, dass die Schraubverbindung des Achsträgerrohrs, das über den Achslagerblock mit dem Gurt verschraubt ist, zu hoch belastet wird und es zur Beschädigung der Schraubverbindung kommen kann. Weiter ist es nachteilig, dass die Schrauben der Schraubverbindung durch den Fördergurt geführt werden müssen. An den Stellen der Schraubendurchführung müssen somit zugträgerfreie Zonen im Fördergurt ausgebildet werden, was die Gesamtzugfestigkeit des Fördergurtes beschränkt.

Der Erfindung liegt die Aufgabe zugrunde, ein gattungsgemäßes Förderband für Langstreckenförderanlagen zu schaffen, bei dem die genannten Querbalken derart ausgebildet sind, dass die Gefahr einer Beschädigung der Verbindung der Querbalken mit dem Fördergurt im laufenden Betrieb wesentlich vermindert wird.

Die Aufgabe wird durch die im Kennzeichen des Anspruchs 1 genannten Merkmale gelöst.

In die quer zur Gurtrichtung angeordneten Aufnahmeschienen sind die Querbalken formschlüssig gesichert einschiebbar. Aufnahmeschiene und Querbalken sind somit im laufenden Betrieb fest miteinander verbunden. Diese Verbindung erstreckt sich gleichmäßig über die gesamte Breite des Fördergurtes. Eine punktuelle Verbindung, die besonders beim Wenden am Ende der Förderstrecke belastet wird, liegt nicht vor.

Die Erfindung hat den Vorteil, dass die Art der Befestigung des Querbalkens es nicht mehr erfordert, zugträgerfreie Zonen im Fördergurt auszubilden. Die Gesamtzugfestigkeit des Fördergurtes mit der gleichen Dimension ist somit größer als bei Fördergurten mit seilfreien Zonen.

Die quer in der Deckplatte des Fördergurtes einvulkanisierte Aufnahmeschiene weist in vorteilhafter Ausgestaltung der Erfindung eine nach oben offene Schwalbenschwanzführung auf. In diese Schwalbenschwanzführung wird ein passender Führungsansatz eines Querbalkens eingeschoben. Es entsteht eine formschlüssige Kraftverbindung zwischen den auch als Achshalterstab wirkenden Querbalken und der Aufnahmeschiene, über die die Kraft in den Fördergurt eingeleitet wird.

In vorteilhafter Ausgestaltung der Erfindung ist die Aufnahmeschiene in einen elastischen Aufnahmekörper eingeklebt, der mit dem Fördergurt durch Vulkanisation verbunden ist.

Aufgrund der elastischen Befestigung der Aufnahmeschiene und somit des verbundnen Querbalkens kann es beim Wenden des Fördergurtes am Ende der Förderstrecke zu vorteilhaften Spannungsausgleichen kommen, so dass eine Schädigung der Achsträgerbefestigung nicht mehr vorliegt.

In weiterer vorteilhafter Ausgestaltung der Erfindung ist der elastische Aufnahmekörper in der Deckplatte des Fördergurtes eingelassen und einvulkanisiert, wobei die Oberflächen der Deckplatte und des Aufnahmekörpers bündig miteinander abschließen.

Weiter ist vorteilhaft, wenn die Oberfläche der Aufnahmeschiene ebenfalls bündig mit der Deckplatte und der Oberfläche des Aufnahmekörpers abschließt.

In weiterer Ausgestaltung der Erfindung ist der Querbalken ein starrer sechskantförmiger Metallstab. Dieser derart geformte Metallstab kann hohe Belastungen aufnehmen.

Durch die in die den Fördergurt eingelassene Aufnahmeschienen wird eine Versteifung des Achslagerblockes erreicht, was zu einer gleichmäßigen Kräfteeinleitung in den gesamten Achslagerblock führt.

Die Aufnahmeschiene ist bevorzugt als Metallschiene ausgebildet, wobei zur guten Korrosionsbeständigkeit ein VA-Stahl bevorzugt wird.

Die Kraft wird über die gesamte Gurtbreite gleichmäßig abgetragen. Es sind keine Schraubverbindungen, die Löcher im Fördergurt benötigen, notwendig. Dadurch sind auch keine seilfreien Zonen über den Gurtquerschnitt notwendig. Die Zugfestigkeit des Fördergurtes bei gleichen Dimensionen ist somit höher.

Zum besseren Verständnis der Erfindung wird diese nachfolgend anhand eines konkreten Ausführungsbeispiels verdeutlicht. Dazu ist der Beschreibung eine Zeichnung beigefügt. Es zeigt
- Fig. 1: einen Förderbandabschnitt mit einem Querbalken;
- Fig. 2: in perspektivischer Darstellung die in eine nach oben offene Ausnehmung eines elastomeren Aufnahmeblockes eingesetzte Aufnahmeschiene;
- Fig. 3: einen sechskantförmigen Querbalken mit achsparallel auf einer Seitenfläche angebrachtem schwalbenschwanzförmigem Führungsansatz;
- Fig. 4: den Montagebeginn des Querbalkens an der Aufnahmeschiene;
- Fig. 5: den in die Aufnahmeschiene eingeschobenen Führungsansatz des Querbalkens.

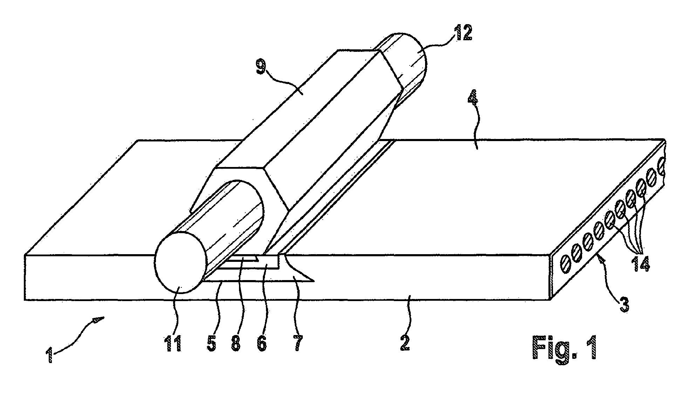

Der in Fig. 1 gezeigte Förderbandabschnitt 1 einer Langstreckenförderanlage weist einen langgestreckten Fördergurt 2 mit einer Unterseite (Laufseite) 3 und einer das Fördergut tragenden Oberseite (Tragseite) 4 auf. Im Bereich der rechts- und linksseitigen Begrenzung des Fördergurtes 2 können hier nicht gezeigte Seitenwände aufgebracht sein. In der Oberseite 4 des Fördergurtes 2 ist eine quer verlaufende Ausnehmung 5 vorhanden, in der eine starre metallische Aufnahmeschiene 6 unter Zwischenlage eines elastomeren Aufnahmeblockes 7 angeordnet ist. In die Aufnahmeschiene 6 ist ein Führungsansatz 8 eines sechskantförmigen Querbalkens 9 eingeschoben. Abweichend von der Sechskantform kann der Querbalken 9 je nach Belastung und Abstand der Querbalken auf dem Fördergurt auch eine Vierkant- oder Achtkantform aufweisen. Dieser Querbalken 9 übernimmt unter anderem die Funktion einer Achse und stellt sicher, dass eine von dem zu fördernden Material auf den Fördergurt 2 wirkende Gewichtskraft über hier nicht gezeigte, an seinen stirnseitigen Achszapfen 11 und 12 befestigte, drehbare Seilrollen eingeleitet werden kann.

Die hier nicht gezeigten Seilrollen laufen auf den parallelen Tragseilen der Langstreckenförderanlage ab. Die Tragseile werden von entsprechenden Tragwerken geführt und gehalten.

Im stirnseitigen Schnitt des Fördergurtes 2 werden die den Fördergurt längsparallel durchziehenden, die Zugfestigkeitsträger darstellenden Stahlseile 14 erkennbar. Sie liegen in gleichmäßigem Abstand zueinander vor. Eine sogenannte seilfreie Zone ist nicht vorhanden.

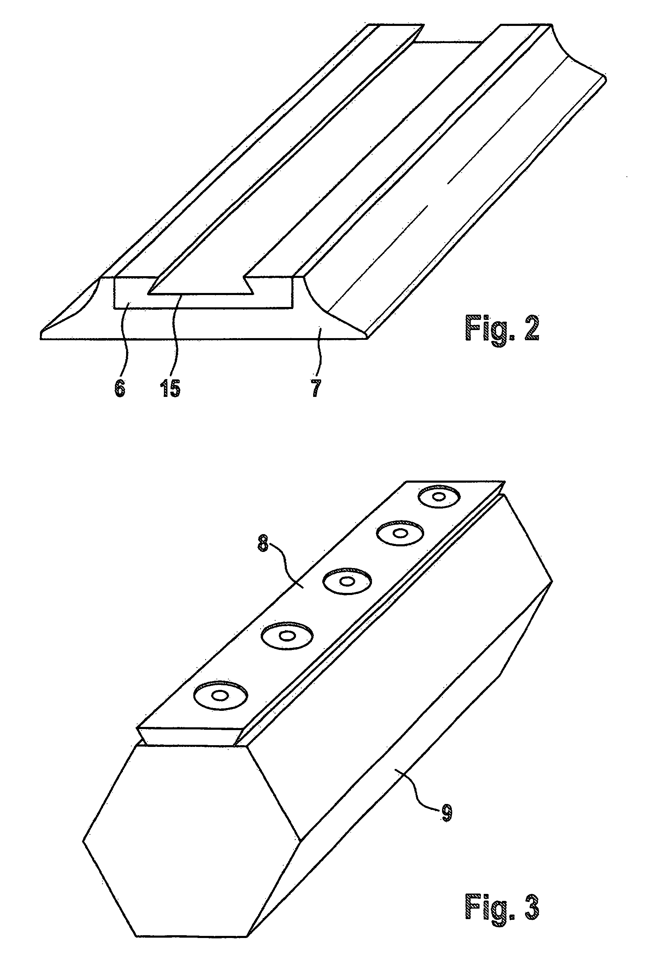

In der Einzelteildarstellung gemäß Fig. 2 wird die metallische Aufnahmeschiene 6 erkennbar, die eine nach oben offene Schwalbenschwanzaufnahme 15 aufweist. Die Aufnahmeschiene 6 ist in den elastomeren Aufnahmeblock 7 eingesetzt und dort mit der Oberseite bündig verklebt.

In Fig. 3 wird der sechskantförmige Querbalken 9 gezeigt, wobei die stirnseitigen Achszapfen fortgelassen sind. Auf einer Sechskantfläche ist längsparallel ein schwalbenschwanzförmiger Führungsansatz 8 am Querbalken 9 angeschraubt. Mit diesem Führungsansatz 8 ist der Querbalken 9 in der Aufnahmeschiene 6 formschlüssig befestigbar unter Einschieben des Führungsansatzes 8 in die Schwalbenschwanzaufnahme 15 der Aufnahmeschiene 6.

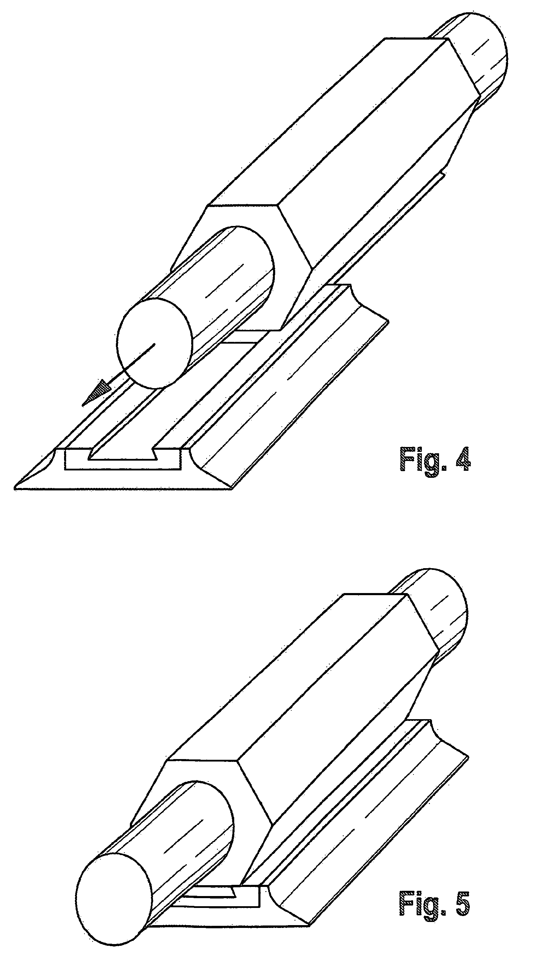

In den Fig. 4 und 5 wird die vorteilhaft einfache Montage des Querbalkens 9 in die jeweilige Aufnahmeschiene 6 schematisch dargestellt. Diese Montage kann vorteilhaft erst am Betriebsort der Langstreckenförderanlage erfolgen. Somit ist eine günstigere Transportmöglichkeit für das Förderband 1 möglich.

### Bezugszeichenliste

- 1: Förderbandabschnitt, Förderband
- 2: Fördergurt
- 3: Unterseite (Laufseite)
- 4: Oberseite (Tragseite)
- 5: Ausnehmung
- 6: Aufnahmeschiene
- 7: elastomerer Aufnahmeblock
- 8: Führungsansatz
- 9: Querbalken
- 11: Achszapfen
- 12: Achszapfen
- 14: Stahlseile
- 15: Schwalbenschwanzaufnahme

## Patentansprüche

1. Förderband (1) für eine Langstreckenförderanlage mit einem langgestreckten Fördergurt (2), an dem in Längsrichtung in Abständen angeordnete Querbalken (9) befestigt sind,
an deren freien Enden jeweils eine Seilrolle drehbar gelagert ist, die sich auf zugeordneten Tragseilen der Langstreckenförderanlage abstützen,
**dadurch gekennzeichnet,**
**dass** an dem Fördergurt (2) in Längsrichtung in Abständen Aufnahmeschienen (6) quer zur Gurtrichtung befestigt sind,
**dass** die Querbalken (9) jeweils einen längsparallelen Führungsansatz (8) aufweisen, der jeweils formschlüssig gesichert in die Aufnahmeschiene (6) einschiebbar ist.

2. Förderband nach Anspruch 1, **dadurch gekennzeichnet, dass** die Aufnahmeschiene (6) eine nach oben offene Schwalbenschwanzaufnahme (15) aufweist, die mit einem schwalbenschwanzförmigen Führungsansatz (8) des Querbalkens (9) korrespondiert.

3. Förderband nach Anspruch 1, **dadurch gekennzeichnet, dass** die Aufnahmeschiene (6) in einen elastischen Aufnahmekörper (7) eingeklebt ist, der mit dem Fördergurt (2) durch Vulkanisation verbunden ist.

4. Förderband nach Anspruch 1, **dadurch gekennzeichnet, dass** der elastische Aufnahmekörper (7) in der Deckplatte (4) des Fördergurtes (2) eingelassen und einvulkanisiert ist, wobei die Oberflächen der Deckplatte (4) und des Aufnahmekörpers (7) bündig miteinander abschließen.

5. Förderband nach Anspruch 1, **dadurch gekennzeichnet, dass** die Oberfläche der Aufnahmeschiene (6) bündig mit der Deckplatte (4) und der Oberfläche des Aufnahmekörpers (7) abschließt.

6. Förderband nach Anspruch 1, **dadurch gekennzeichnet, dass** der Querbalken (9) ein starrer sechskantförmiger Metallstab ist.

## Claims

1. Conveying-belt arrangement (1) for a long-distance conveying installation, having an elongate conveying belt (2) on which are fastened longitudinally spaced-apart crossbars (9),
which have mounted in a rotatable manner at each of their free ends a respective cable pulley, and these pulleys are supported on associated load-bearing cables of the long-distance conveying installation,
**characterized**
**in that** accommodating rails (6) are fastened at longitudinally spaced-apart intervals on the conveying belt (2), transversely to the direction of the belt, and
**in that** the crossbars (9) each have a longitudinally parallel guide extension (8) which can be pushed into the accommodating rail (6) so as to be secured in a form-fitting manner in each case.

2. Conveying-belt arrangement according to Claim 1, **characterized in that** the accommodating rail (6) has a dovetail holder (15) which is open in the upward direction and corresponds with a dovetail-shaped guide extension (8) of the crossbar (9).

3. Conveying-belt arrangement according to Claim 1, **characterized in that** the accommodating rail (6) is adhesively bonded in an elastic accommodating body (7) which is connected to the conveying belt (2) by vulcanization.

4. Conveying-belt arrangement according to Claim 1, **characterized in that** the elastic accommodating body (7) is incorporated in the cover panel (4) of the conveying belt (2) and vulcanized therein, wherein the surfaces of the cover panel (4) and of the accommodating body (7) terminate flush with one another.

5. Conveying-belt arrangement according to Claim 1, **characterized in that** the surface of the accommodating rail (6) terminates flush with the cover panel (4) and the surface of the accommodating body (7).

6. Conveying-belt arrangement according to Claim 1, **characterized in that** the crossbar (9) is a rigid hexagonal metal bar.

## Revendications

1. Bande transporteuse (1) pour une installation de transport en longueur, comprenant une courroie transporteuse allongée (2) sur laquelle sont fixées des barres transversales (9) disposées à distance les unes des autres dans la direction longitudinale,
aux extrémités libres des quelles est montée à rotation à chaque fois une poulie qui s'appuie sur des câbles porteurs associés de l'installation de transport en longueur,
**caractérisée en ce que**
des rails de réception (6) sont fixés transversalement à la direction de la courroie à distance les uns des autres dans la direction longitudinale sur la courroie de transport (2),
**en ce que** les barres transversales (9) présentent à chaque fois une pièce de guidage (8) de longueur parallèle, qui peut être insérée dans le rail de réception (6) à chaque fois par fixation par engagement par correspondance géométrique.

2. Bande transporteuse selon la revendication 1,
**caractérisée en ce que** le rail de réception (6) présente un logement en queue d'aronde ouvert vers le haut (15), qui correspond à une pièce de guidage (8) en forme de queue d'aronde de la barre transversale (9).

3. Bande transporteuse selon la revendication 1,
**caractérisée en ce que** le rail de réception (6) est collé dans un corps de réception élastique (7) qui est connecté à la courroie transporteuse (2) par vulcanisation.

4. Bande transporteuse selon la revendication 1,
**caractérisée en ce que** le corps de réception élastique (7) est incorporé et vulcanisé dans la plaque de recouvrement (4) de la courroie transporteuse (2), les surfaces de la plaque de recouvrement (4) et du corps de réception (7) se terminant en affleurement l'une avec l'autre.

5. Bande transporteuse selon la revendication 1,
**caractérisée en ce que** la surface du rail de réception (6) se termine en affleurement avec la plaque de recouvrement (4) et la surface du corps de réception (7).

6. Bande transporteuse selon la revendication 1,
**caractérisée en ce que** la barre transversale (9) est un barre métallique rigide à six pans.
